# EUROPÄISCHE PATENTSCHRIFT

(11) **EP 4 491 358 B1**
(45) Veröffentlichungstag und Bekanntmachung des Hinweises auf die Patenterteilung: **03.12.2025**
(21) Anmeldenummer: 24186117.8
(22) Anmeldetag: 02.07.2024
(51) Int. Cl.: B26D 3/08, B26D 7/18, B26F 1/38

(54) **VORRICHTUNG UND VERFAHREN ZUM EINBRINGEN VON FENSTERAUSSCHNITTEN IN EIN BAHNFÖRMIGES RAHMENMATERIAL**
DEVICE AND METHOD FOR INTRODUCING WINDOW OPENINGS INTO A WEB-SHAPED FRAME MATERIAL
DISPOSITIF ET PROCÉDÉ POUR INSÉRER DES FENÊTRES DANS UN CADRE EN FORME DE BANDE

(30) Priorität: 12.07.2023 DE 102023118404
(43) Veröffentlichungstag der Anmeldung: 15.01.2025
(73) Patentinhaber: OPTIMA life science GmbH, 74523 Schwäbisch Hall (DE)
(72) Erfinder: Jansen, Johannes, 74545 Michelfeld (DE); Dennert, Martin, 56321 Brey (DE)
(74) Vertreter: Patentanwälte Ruff, Wilhelm, Beier, Dauster & Partner mbB

(56) Entgegenhaltungen:
- CA-A1- 3 011 052
- DE-A1- 102007 016 426
- DE-A1- 102021 209 815
- DE-B2- 2 347 522

## Beschreibung

### ANWENDUNGSGEBIET UND STAND DER TECHNIK

Die Erfindung betrifft eine Vorrichtung und ein Verfahren zum Einbringen von Fensterausschnitten in ein bahnförmiges Rahmenmaterial für eine Membran-Elektroden-Einheit. Die Erfindung betrifft weiter die Verwendung einer drehbaren Walze beim Einbringen von Fensterausschnitten.

Es ist bekannt, eine Membran-Elektroden-Anordnung (Engl. membrane electrode assembly, kurz MEA) oder Teile davon für eine Brennstoffzelle, eine Elektrolysezelle oder eine Redox-Flow-Zelle (Flüssigbatterie) oder Membran-basierte Luftbefeuchter aus Materialbahnen herzustellen. Die MEA umfasst in Ausgestaltungen eine Katalysator-beschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Für einen weiteren Aufbau können an Außenseiten der MEA zwei Gasdiffusionslagen (kurz GDL) angebracht werden. Ein Anbringen der GDL kann dabei in einem Prozess mit der Herstellung der MEA umfassend die CCM und den oder die Rahmen oder in einem räumlich und/oder zeitlich getrennten Prozess erfolgen. In einer anderen Ausgestaltung wird eine MEA umfassend eine Membran und zwei daran angeordnete Gasdiffusionslagen bereitgestellt, wobei an dieser MEA einseitig oder beidseitig Randverstärkungen oder Rahmen angebracht werden.

Dabei ist es bekannt, für die Rahmen ein bahnförmiges Rahmenmaterial bereitzustellen, wobei in das Rahmenmaterial Fensterausschnitte eingebracht werden und die CCM derart mit dem Rahmenmaterial verbunden wird, dass ein aktiver Bereich in den Fensterausschnitten angeordnet wird und ein Rand des aktiven Bereichs durch die Rahmen abgedeckt wird. Ein Einbringen der Fensterausschnitte erfolgt beispielsweise mittels Stanzen, insbesondere Rotationsstanzen. Ein innerhalb der Fensterausschnitte liegender, zu entfernender Bereich des Rahmenmaterials wird daher auch als Stanzrest bezeichnet.

Es ist weiter bekannt, an dem Rahmenmaterial für eine Verbindung mit der CCM eine adhäsive Beschichtung vorzusehen, wobei die adhäsive Schicht mit einem Schutzfilm abgedeckt ist. Der Schutzfilm dient in Ausgestaltungen auch einer Stabilisierung des Rahmenmaterials und wird bei bekannten Vorrichtungen und Verfahren von dem Rahmenmaterial nach dem Stanzen delaminiert. Als Delamination wird dabei im Zusammenhang mit der Anmeldung ein Abziehen oder Ablösen bezeichnet. Um für eine Weiterverarbeitung eine ausreichende Stabilität des Rahmenmaterials nach einer Delamination des Schutzfilms sicherzustellen, ist es bekannt, das Rahmenmaterial vor der Delamination des Schutzfilms auf ein Gegenelement aufzubringen. Bei dem Gegenelement handelt es sich beispielsweise um eine Trägerbahn, welche mit dem Rahmenmaterial laminiert wird.

Dabei ist es beispielsweise aus DE102021209815 A1 bekannt, beim Einbringen von Fensterausschnitten in ein bahnförmiges Rahmenmaterial, die Stanzreste auf der Trägerbahn für einen Schutz der CCM zu belassen.

Alternativ sind die Stanzreste in einem Schritt mit der Delamination des Schutzfilms von dem Rahmenmaterial zu entfernen. Bei einer Delamination des Schutzfilms nach einer Lamination des Rahmenmaterials mit einer Trägerbahn muss eine adhäsive Wirkung des Schutzfilms auf die Stanzreste sowohl eine adhäsive Wirkung der Trägerbahn auf die Stanzreste als auch eine Eigensteifigkeit der Stanzreste bei einer Ablenkung von dem Rahmenmaterial überwinden. Gleichzeitig muss eine adhäsive Wirkung der Trägerbahn auf das Rahmenmaterial ausreichend sein, so dass keine Bereiche des durch die Fensterausnehmungen geschwächten Rahmenmaterials von der Trägerbahn abgezogen oder angehoben werden und später zu Faltenwurf oder Lufteinschlüssen an der MEA führen.

DE 10 2007 016426 A1 offenbart eine Vorrichtung zum Einbringen von Fensterausschnitten in ein bahnförmiges Rahmenmaterial für eine Membran-Elektroden-Einheit, wobei eine Stanzeinrichtung und eine Ablöseeinrichtung vorgesehen sind, WOBEI die Ablöseeinrichtung eine drehbare Walze und eine Vakuumeinrichtung umfasst, wobei an der Walze eine mit der Vakuumeinrichtung fluidisch verbindbare Saugöffnung vorgesehen ist, und wobei die Vakuumeinrichtung eingerichtet ist, um über die Saugöffnung bei einer Drehung der Walze eine Saugkraft auf den Stanzrest aufzubringen, um den Stanzrest mittels der Saugkraft abzulösen.

CA 3 011 052 A1 offenbart eine Verwendung einer drehbaren Walze beim Einbringen eines Fensterausschnitts in ein bahnförmiges Rahmenmaterial, wobei das Rahmenmaterial der Walze zuführbar ist, wobei an der Walze eine mit einer Vakuumeinrichtung fluidisch verbindbare Saugöffnung vorgesehen ist, wobei über die Saugöffnung bei einer Drehung der Walze eine Saugkraft auf einen in dem Fensterausschnitt angeordneten Stanzrest aufbringbar ist, um den Stanzrest des Rahmenmaterials mittels der Saugkraft von der Trägerbahn abzulösen und mittels der Walze von dem Materialverbund abzutransportieren.

### AUFGABE UND LÖSUNG

Es sind Aufgaben der Erfindung, eine Vorrichtung und ein Verfahren zum Einbringen von Fensterausschnitten in ein bahnförmiges Rahmenmaterial für eine Membran-Elektroden-Einheit zu schaffen, welche ein sicheres Ablösen und Entfernen von Stanzresten erlauben.

Diese Aufgaben werden gelöst durch die Gegenstände mit den Merkmalen der Ansprüche 1, 9 und 13. Vorteilhafte Ausgestaltungen ergeben sich aus den Unteransprüchen.

Gemäß einem ersten Aspekt wird eine Vorrichtung zum Einbringen von Fensterausschnitten in ein bahnförmiges Rahmenmaterial für eine Membran-Elektroden-Einheit geschaffen, wobei eine Stanzeinrichtung und eine Ablöseeinrichtung vorgesehen sind, wobei das Rahmenmaterial als Materialverbund mit einer Trägerbahn der Stanzeinrichtung zuführbar ist, wobei die Stanzeinrichtung eingerichtet ist, um in das Rahmenmaterial von einer der Trägerbahn gegenüberliegenden Seite des Rahmenmaterials einen das Rahmenmaterial durchtrennenden Konturschnitt unter Bildung eines Stanzrests einzubringen, ohne die Trägerbahn zu durchtrennen, wobei die Ablöseeinrichtung eingerichtet ist, um den Stanzrest von dem Materialverbund zu trennen, wobei die Ablöseeinrichtung eine drehbare Walze und eine Vakuumeinrichtung umfasst, wobei an der Walze eine mit der Vakuumeinrichtung fluidisch verbindbare Saugöffnung vorgesehen ist, und wobei die Vakuumeinrichtung eingerichtet ist, um über die Saugöffnung bei einer Drehung der Walze eine Saugkraft auf den Stanzrest aufzubringen, um den Stanzrest mittels der Saugkraft von der Trägerbahn abzulösen und mittels der Walze von dem Materialverbund abzutransportieren.

Gemäß einem zweiten Aspekt wird ein Verfahren zum Einbringen von Fensterausschnitten in ein bahnförmiges Rahmenmaterial für eine Membran-Elektroden-Einheit geschaffen, wobei das Rahmenmaterial zumindest abschnittsweise als Materialverbund mit einer Trägerbahn verarbeitet wird, wobei in das Rahmenmaterial von einer der Trägerbahn gegenüberliegenden Seite des Rahmenmaterials ein das Rahmenmaterial durchtrennender Konturschnitt unter Bildung eines Stanzrest eingebracht wird, wobei der Konturschnitt eingebracht wird, ohne die Trägerbahn zu durchtrennen, wobei der Stanzrest mittels einer drehbaren Walze mit einer Saugöffnung von dem Materialverbund getrennt wird, und wobei über die Saugöffnung eine Saugkraft auf den Stanzrest aufgebracht wird, sodass der Stanzrest mittels der Saugkraft von der Trägerbahn abgelöst und mittels der Walze von dem Materialverbund abtransportiert wird.

Gemäß einem dritten Aspekt wird die Verwendung einer drehbaren Walze beim Einbringen eines Fensterausschnitts in ein bahnförmiges Rahmenmaterial für eine Membran-Elektroden-Einheit geschaffen, wobei das Rahmenmaterial als Materialverbund mit einer Trägerbahn der Walze zuführbar ist, wobei an der Walze eine mit einer Vakuumeinrichtung fluidisch verbindbare Saugöffnung vorgesehen ist, wobei über die Saugöffnung bei einer Drehung der Walze eine Saugkraft auf einen in dem Fensterausschnitt angeordneten Stanzrest des Rahmenmaterials aufbringbar ist, um den Stanzrest mittels der Saugkraft von der Trägerbahn abzulösen und mittels der Walze von dem Materialverbund abzutransportieren.

Die Begriffe "ein", "eine", "einer" etc. werden im Zusammenhang mit der Anmeldung als unbestimmte Artikel und nicht als Zählwörter verwendet. Insbesondere umfasst die Walze in Ausgestaltungen mehr als eine mit der Vakuumeinrichtung verbundene Saugöffnung. Mittels der Saugöffnung oder der Saugöffnungen wird eine Saugkraft auf den Stanzrest aufgebracht. Die Saugöffnungen sind um ein Vielfaches kleiner als ein einzubringender Fensterausschnitt, sodass der Stanzrest an die Walze angesaugt wird, nicht jedoch in die Saugöffnungen gesaugt wird.

Die Walze ist in Ausgestaltungen als Stanz- und Ablösewalze umfassend die Saugöffnung und eine geschlossene Stanzkontur für den einzubringenden Konturschnitt gestaltet, wobei die Saugöffnung innerhalb der geschlossenen Stanzkontur angeordnet ist. Ein Abtransport der Stanzreste erfolgt dabei mit einem Durchtrennen des Rahmenmaterials beim Einbringen der Konturschnitte.

Wie erwähnt, ist der Begriff "ein" lediglich als unbestimmter Artikel zu verstehen und an der Stanz- und Ablösewalze sind in Ausgestaltungen mehrere Stanzkonturen vorgesehen, wobei eine Verteilung und/oder ein Abstand zwischen den Stanzkonturen im Umfangsrichtung der Stanz- und Ablösewalze in Abhängigkeit verschiedener Rahmenbedingungen wie einer Größe der Walze, einer Prozessgeschwindigkeit und/oder einer Größe der herzustellenden Rahmen durch eine auf dem Fachgebiet tätige Person geeignet festlegbar ist.

Für ein verbessertes Ablösen des Stanzrests von der Trägerbahn ist dabei in Ausgestaltungen stromaufwärts der Stanz- und Ablösewalze eine Prägewalze zum Aufbringen einer Prägelinie an dem Stanzrest vorgesehen.

Die Stanz- und Ablösewalze ist in Ausgestaltungen als Vakuumwalze umfassend eine Vielzahl an über den Umfang verteilt angeordneten Saugöffnungen gestaltet, wobei die Vorrichtung ein die Stanzkontur aufweisendes Stanzblech umfasst, das an einem Umfang der Stanz- und Ablösewalze befestigbar ist, insbesondere lösbar befestigbar ist, wobei das Stanzblech innerhalb der Stanzkontur einen Durchbruch für eine oder mehrere Saugöffnungen aufweist. Die Vakuumwalze ist in Ausgestaltungen als Magnet-Vakuumwalze gestaltet, wobei das Stanzblech mittels Magnetkraft an einem Umfang der Magnet-Vakuumwalze befestigbar ist. Die Stanzbleche sind dabei in Ausgestaltungen geeignet gestaltet, um Saugöffnungen in Bereichen, welche die Stanzkontur umgeben, abzudecken, sodass über diese Saugöffnungen keine Saugkraft auf das Rahmenmaterial aufgebracht wird. Alternativ oder zusätzlich ist in Ausgestaltungen vorgesehen, dass Saugöffnungen der Vakuumwalze selektiv ansteuerbar sind. In wieder anderen Ausgestaltungen sind die Saugöffnungen ungleichmäßig über den Umfang verteilt angeordnet, um Bereiche mit Saugwirkung und Bereiche ohne Saugwirkung zu schaffen.

Der Durchbruch ist je nach Anwendungsfall geeignet gestaltbar, sodass eine oder mehrere Saugöffnungen innerhalb der Stanzkontur freigelegt werden, sodass über diese Saugöffnungen die Saugkraft zum Ablösen des Stanzrests aufbringbar ist. Für ein sicheres Ablösen ist/sind in Ausgestaltungen insbesondere in einem Bereich angrenzend an eine in Drehrichtung vorne liegenden Kante der Stanzkontur ein Durchbruch oder mehrere Durchbrüche zum Freilegen von Saugöffnungen vorgesehen, sodass ein Anfang des Stanzrests abgelöst wird.

Der Durchbruch oder die Durchbrüche ist/sind in Ausgestaltungen von einem durchgehenden oder unterbrochenen von einer Oberfläche des Stanzblechs abragenden Steg begrenzt. Der Steg erlaubt es, einen Bereich, in welchem die Saugkraft auf den Stanzrest wirkt, zu begrenzen. Der Stanzrest wird dabei innerhalb des Durchbruchs in Richtung der Vakuumwalze für ein sicheres Ablösen verwölbt. Gleichzeitig wird ein Verzug des Rahmenmaterials in einem der Stanzkontur gegenüberliegenden Abschnitt des Rahmenmaterials verhindert.

Die Gestaltung der Stanz- und Ablösewalze als Vakuumwalze, insbesondere als Magnet-Vakuumwalze, zeichnet sich aufgrund ihrer hohen Flexibilität aus, wobei eine Anzahl und/oder Anordnung der Stanzbleche je nach Anwendungsfall geeignet festlegbar ist und eine einfache Umrüstung der Vorrichtung bei einem Formatwechsel möglich ist.

Die Erfindung ist jedoch nicht auf die Verwendung einer Vakuumwalze und Stanzbleche beschränkt. Insbesondere ist in Ausgestaltungen vorgesehen, dass die Stanz- und Ablösewalze einen rotierenden Walzenkörper mit einer geschlossenen Oberfläche gestaltet ist, wobei die Stanzkontur an einer Oberfläche des Walzenkörpers vorgesehen ist, und wobei innerhalb der Stanzkontur an der Oberfläche des Walzenkörpers ein Einsatz für die Saugöffnung vorgesehen ist. Dabei ist in Ausgestaltung ein die Saugöffnung zum Aufbringen der Saugkraft umgebender Steg an dem Einsatz vorgesehen. Innerhalb eines durch den Steg begrenzten Bereichs sind in Ausgestaltungen mehrere Saugöffnungen vorgesehen, über welche die Saugkraft zum Ablösen des Stanzrests aufgebracht wird.

Alternativ zu einer Stanz- und Ablösewalze umfasst die Stanzeinrichtung in Ausgestaltungen eine gesonderte drehbare Stanzwalze, wobei die Stanzwalze eine geschlossene Stanzkontur für den einzubringenden Konturschnitt aufweist. Die Stanzwalze ist dabei stromaufwärts der Walze angeordnet. Wie erwähnt, ist der Begriff "ein" lediglich als unbestimmter Artikel zu verstehen und an der Stanzwalze sind in Ausgestaltungen mehrere Stanzkonturen vorgesehen, wobei eine Verteilung und/oder ein Abstand zwischen den Stanzkonturen im Umfangsrichtung der Stanzwalze in Abhängigkeit verschiedener Rahmenbedingungen wie einer Größe der Walze, einer Prozessgeschwindigkeit und/oder einer Größe der herzustellenden Rahmen durch eine auf dem Fachgebiet tätige Person geeignet festlegbar ist.

Die gesonderte Stanzwalze ist in Ausgestaltungen derart gestaltet, dass mittels der gesonderten Stanzwalze die Stanzreste eines an dem Rahmenmaterial gegenüberliegend zu der Trägerbahn angeordneten Schutzfilms ablösbar sind, wobei zum Ablösen der Stanzreste des Rahmenmaterials die stromabwärts der Stanzwalze angeordnete Walze verwendet wird. In anderen Ausgestaltungen dient die gesonderte Stanzwalze lediglich zum Einbringen des Konturschnitts, während zum Ablösen der Stanzreste eines Schutzfilms und der Stanzreste des Rahmenmaterials die Walze verwendet wird.

Die Stanzwalze weist dabei in Ausgestaltungen eine Prägekante zum Aufbringen einer Prägelinie an dem Stanzrest parallel zu einer vorderen Kante des Stanzrests auf. Ein vorderer Bereich des Stanzrests kann um die Prägelinie beim oder vor dem Ablösen des Stanzrests gebogen werden. Die Prägelinie dient so als Hilfestellung bei einem Ablösen des Stanzrests von der Trägerbahn.

In Ausgestaltungen ist vorgesehen, dass mittels der Stanzwalze oder der Stanz- und Ablösewalze in das Rahmenmaterial zusätzlich zu den Fensterausschnitten weitere Ausnehmungen eingebracht werden, welche in einem späteren Materialverbund Kanalstrukturen oder Öffnungen für Anschlüsse bilden.

In einer Ausgestaltung ist vorgesehen, dass die Stanzkontur der Stanz- und Ablösewalze bzw. der Stanzwalze eine asymmetrische Schneide aufweist, wobei insbesondere ein Winkel der Schneide relativ zu einer Radialrichtung der Walze an einer dem Stanzrest zugewandten Innenseite größer ist als an einer gegenüberliegenden Außenseite. Ein durchtrenntes Material wird beim Durchtrennen aufgrund eines Keilwinkels der Schneide zur Seite verdrängt. Dabei wird das durchtrennte Material bei einem stumpferen Keilwinkel stärker zur Seite gedrängt, als bei einem spitzen Keilwinkel. Dieser Effekt wird genutzt, indem ein Winkel an einer dem Stanzrest zugewandten Seite größer, d.h. stumpfer, gewählt wird, als an einer gegenüberliegenden Seite. Durch den größeren Winkel wird ein Ablösen des Stanzrests bereits beim Durchtrennen bewirkt Durch einen auf der anderen Seite vorgesehenen kleineren oder spitzeren Winkel wird bewirkt, dass das Rahmenmaterial im Bereich der Schneidkontur besser an der Trägerbahn anhaftet.

Die Ablöseeinrichtung umfasst in Ausgestaltungen einen am Umfang der Walze angeordneten Absaugtrichter. Eine Gestaltung und/oder Positionierung des Absaugtrichters ist dabei je nach Anwendungsfall geeignet wählbar.

Die Verwendung einer Walze zum gezielten Ablösen und Abtransport der Stanzreste des Rahmenmaterials ist sowohl für Anwendungen einsetzbar, bei welchen das Rahmenmaterial ohne Schutzfilm bereitgestellt wird, als auch für Anwendungen, bei welcher das Rahmenmaterial auf einem Schutzfilm bereitgestellt wird.

In einer Ausgestaltungen ist das Rahmenmaterial als Materialverbund mit einem Schutzfilm bereitstellbar, wobei eine Laminiereinrichtung zum Aufbringen der Trägerbahn eingerichtet ist, um die Trägerbahn auf einer dem Schutzfilm gegenüberliegenden Seite mit dem Rahmenmaterial zu verbinden, und wobei die Vorrichtung eine stromaufwärts oder stromabwärts der Stanzeinrichtung und der Ablöseeinrichtung angeordnete Delaminiereinrichtung aufweist, die eingerichtet ist, um den Schutzfilm von dem Rahmenmaterial zu delaminieren. Sofern eine separate Prägewalze vorhanden ist, kann diese in Transportrichtung des Rahmenmaterials stromaufwärts oder stromabwärts der Laminiereinrichtung vorgesehen sein.

In Ausgestaltungen wird der Schutzfilm nach einem Laminieren des Rahmenmaterials mit der Trägerbahn und vor einem Einschneiden des Rahmenmaterials delaminiert. Dies erlaubt ein einfaches Delaminieren des nicht eingeschnittenen Schutzfilms und eine sortenreine, einfache Entsorgung und/oder Wiederaufbereitung des Schutzfilms und der Stanzreste. In anderen Ausgestaltungen verbleibt der Schutzfilm beim Einschneiden des Rahmenmaterials auf dem Rahmenmaterial. Der Schutzfilm dient dabei auch beim Einschneiden des Rahmenmaterials einer Stabilisierung. Der an der gegenüberliegenden Seite zu der Trägerbahn angeordnete Schutzfilm wird dabei mit dem Rahmenmaterial durchschnitten und Stanzreste des Rahmenmaterials werden mit den Stanzresten des Schutzfilms mittels der Walze abtransportiert. Ein nach dem Abtransport des Stanzreste auf dem Rahmenmaterial verbleibendes Restegitter des Schutzfilms kann anschließend von dem Rahmenmaterial delaminiert werden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind. Für gleiche oder ähnliche Bauteile werden in den Figuren und der nachfolgenden Beschreibung einheitliche Bezugszeichen verwendet. Dabei zeigen:
- Fig. 1:: eine Herstellung einer MEA in einem bahnverarbeitenden Prozess;
- Fig. 2:: ein erstes Ausführungsbeispiel einer Vorrichtung zum Einbringen von Fensterausschnitten in ein Rahmenmaterial;
- Fig. 3a:: in einer abgewickelten Draufsicht einen Ausschnitt einer Vakuumwalze und eines Stanzblechs zur Verwendung in einer Vorrichtung gemäß Fig. 2;
- Fig. 3b:: eine Schnittansicht entlang einer Linie A-A gemäß Fig. 3b;
- Fig. 4:: eine alternative Ausgestaltung einer Stanz- und Ablösewalze für eine Vorrichtung gemäß Fig. 2;
- Fig. 5:: ein zweites Ausführungsbeispiel einer Vorrichtung zum Einbringen von Fensterausschnitten in ein Rahmenmaterial;
- Fig. 6:: ein drittes Ausführungsbeispiel einer Vorrichtung zum Einbringen von Fensterausschnitten in ein Rahmenmaterial; und
- Fig. 7:: schematisch eine Stanzkontur der Stanz- und Ablösewalze gemäß einer der Fig. 2 bis 4 oder der Stanzwalze gemäß Fig. 6.

### DETAILLIERTE BESCHREIBUNG DER AUSFÜHRUNGSBEISPIELE

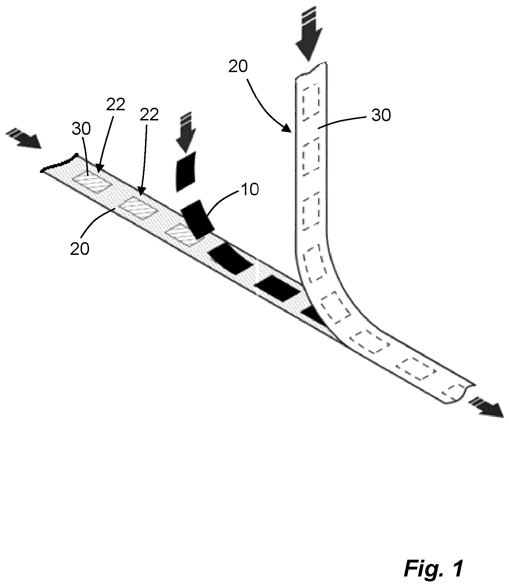

Fig. 1 zeigt sehr schematisiert ein Verfahren zur Herstellung einer MEA umfassend eine als Zuschnitt zugeführte Membran 10, beispielsweise eine CCM, welche beidseits mit einem bahnförmigen Rahmenmaterial 20 verbunden wird. Das Rahmenmaterial 20 wird jeweils als Materialverbund mit einer Trägerbahn 30 bereitgestellt. In anderen Ausgestaltungen wird nur ein Rahmenmaterial 20 als Materialverbund bereitgestellt.

In das Rahmenmaterial 20 sind jeweils Fensterausschnitte 22 eingebracht, wobei ein aktiver Bereich der Membran 10 im Bereich der Fensterausschnitte 22 angeordnet wird.

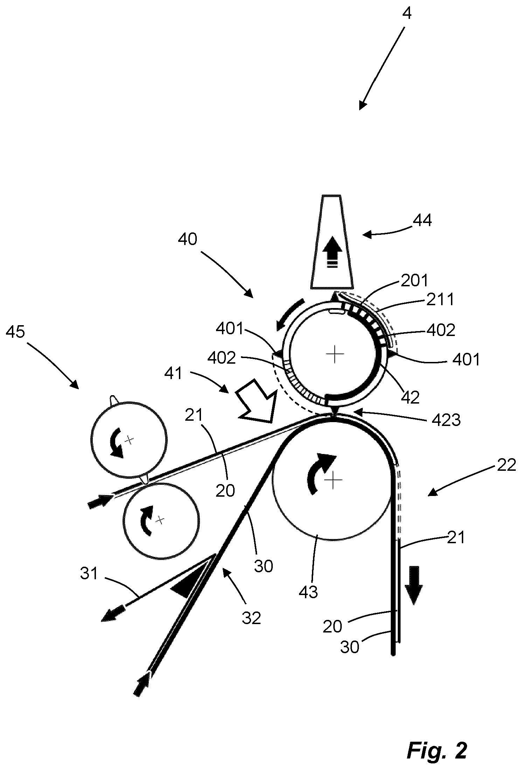

Fig. 2 zeigt schematisiert ein erstes Ausführungsbeispiel einer Vorrichtung 4 zum Einbringen der Fensterausschnitte 22 in das Rahmenmaterial 20.

Die in Fig. 2 dargestellte Vorrichtung umfasst eine Stanz- und Ablösewalze 40. Das Rahmenmaterial 20 wird als Materialverbund mit der Trägerbahn 30 der Stanz- und Ablösewalze 40 zugeführt. In dem dargestellten Ausführungsbeispiel ist an einer dem Rahmenmaterial 20 zugewandten Seite der Trägerbahn 30 eine adhäsive Beschichtung vorgesehen, mittels welcher das Rahmenmaterial 20 mit der Trägerbahn 30 laminiert wird, d.h. vorliegend lösbar verbunden wird. Die adhäsive Beschichtung ist mittels eines Schutzfilms 31 abgedeckt. Der Schutzfilm 31 wird vor einer Verbindung mit dem Rahmenmaterial 20 an einer Delaminiereinrichtung 32 entfernt. In Transportrichtung der Trägerbahn 30 stromabwärts der Delaminiereinrichtung 32 wird das Rahmenmaterial 20 mit der Trägerbahn 30 an einer schematisch als Pfeil dargestellten Laminiereinrichtung 41 laminiert.

Die Stanz- und Ablösewalze 40 umfasst mindestens eine Stanzkontur 401, in dem dargestellten Ausführungsbeispiel zwei Stanzkonturen 401. Die Zahl und Anordnung der Stanzkonturen 401 ist jedoch lediglich beispielhaft.

Mittels der Stanzkonturen 401 ist jeweils ein das Rahmenmaterial 20 durchtrennender, umlaufender Konturschnitt für einen Fensterausschnitt 22 einbringbar, ohne dass die Trägerbahn 30 durchtrennt wird. Die Trägerbahn 30 dient so einer Stabilisierung. Um ein vollständiges Durchtrennen des Rahmenmaterials 20 sicherzustellen, dringt die Stanzkontur 401 in Ausgestaltungen in die Trägerbahn 30 ein, ohne die Trägerbahn 30 jedoch zu durchtrennen. In anderen Ausgestaltungen bleibt die Trägerbahn 30 unbeschädigt beim Durchtrennen des Rahmenmaterials 20. Die Stanz- und Ablösewalze 40 wirkt mit einer Ambosswalze 43 zusammen, wobei zwischen der Stanz- und Ablösewalze 40 und der Ambosswalze 43 ein Schneidspalt 423 gebildet ist.

In dem dargestellten Ausführungsbeispiel ist an dem Rahmenmaterial 20 ein Schutzfilm 21 vorgesehen, wobei die Trägerbahn 30 und der Schutzfilm 21 an gegenüberliegenden Seiten des Rahmenmaterials 20 angeordnet sind. Der Schutzfilm 21 wird mit dem Rahmenmaterial 20 durchtrennt, wobei jeweils ein Stanzrest 201, 211 gebildet wird.

Die Stanz- und Ablösewalze 40 weist weiter eine Vielzahl an jeweils innerhalb der Stanzkontur 401 angeordneten Saugöffnungen 402 auf.

Die drehbare Stanz- und Ablösewalze 40 ist Teil einer Ablöseeinrichtung, welche weiter einer schematisch dargestellte Vakuumeinrichtung 42 umfasst, wobei die Vakuumeinrichtung 42 fluidisch mit den Saugöffnung 402 verbindbar ist.

Die Vakuumeinrichtung 42 ist eingerichtet, um über die Saugöffnung 402 bei einer Drehung der Stanz- und Ablösewalze 40 in einem in Drehrichtung auf den Schneidspalt 423 folgenden Bereich eine Saugkraft auf die Stanzreste 201, 211 aufzubringen, um die Stanzreste 201, 211 mittels der Saugkraft von der Trägerbahn 30 abzulösen und um die Stanzreste 201, 211 von dem Materialverbund umfassend Trägerbahn 30 und Rahmenmaterial 20 abzutransportieren.

Die dargestellte Ablöseeinrichtung umfasst weiter einen am Umfang der Stanz- und Ablösewalze 40 angeordneten Absaugtrichter 44. Der Absaugtrichter 44 übernimmt die Stanzreste 201, 202 von der Stanz- und Ablösewalze 40 für einen weiteren Abtransport.

In Transportrichtung des Rahmenmaterials 20 stromabwärts zu einem Ablösen der Stanzreste 201, 211 ist in Ausgestaltungen eine in Fig. 1 nicht dargestellte Delaminiereinrichtung vorgesehen, mittels welcher ein auf dem Rahmenmaterial 20 verbleibendes Restegitter des Schutzfilms 21 von dem Rahmenmaterial 20 delaminierbar ist.

In dem dargestellten Ausführungsbeispiel ist weiter stromaufwärts der Stanz- und Ablösewalze 40 eine Prägewalze 45 zum Aufbringen einer Prägelinie an dem nachfolgend gebildeten Stanzrest 201 vorgesehen ist. Die Prägelinie wird parallel zu einer vorderen Kante des späteren Stanzrests 201 eingebracht. Ein vorderer Bereich des späteren Stanzrests 201 kann um die Prägelinie beim oder vor dem Ablösen des Stanzrests 201 gebogen werden. Die Prägelinie dient so als Hilfestellung bei einem Ablösen des Stanzrests 201 von dem Trägerfilm 30. Ein Abstand der Prägelinie von einer vorderen Kante des Stanzrests 201 ist je nach Anwendungsfall geeignet wählbar.

In dem dargestellten Ausführungsbeispiel ist die Prägewalze 45 in Transportrichtung des Rahmenmaterials 20 stromaufwärts der Laminiereinrichtung 41 vorgesehen. In anderen Ausgestaltungen ist die Prägewalze 45 stromabwärts der Laminiereinrichtung 41 angeordnet.

Die in Fig. 2 dargestellte Stanz- und Ablösewalze 40 ist in Ausgestaltungen als Vakuumwalze umfassend eine Vielzahl an über den Umfang verteilt angeordneten Saugöffnungen 402 gestaltet, wobei an einem Umfang der Stanz- und Ablösewalze 40 ein die Stanzkontur 401 aufweisendes Stanzblech befestigbar ist oder mehrere, jeweils ein Stanzkontur 401 aufweisende Stanzbleche befestigbar sind.

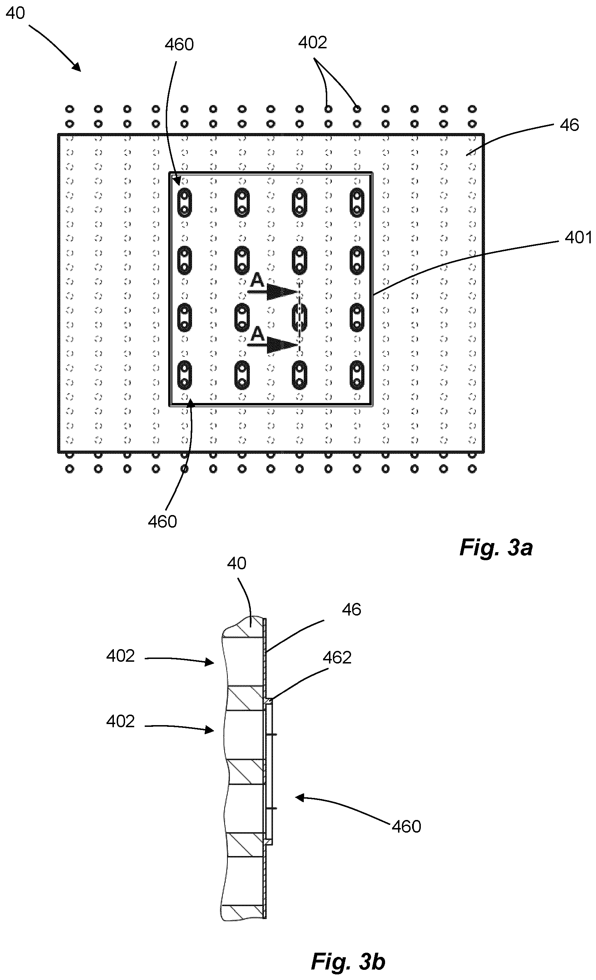

Fig. 3a und 3b zeigen schematisch in einer abgewickelten Draufsicht bzw. einer Schnittansicht einen Ausschnitt einer als Vakuumwalze gestalteten Stanz- und Ablösewalze 40 und ein Stanzblech 46. Wie in Fig. 3a schematisch dargestellt, weist die als Vakuumwalze gestalteten Stanz- und Ablösewalze 40 in Ausgestaltungen eine Vielzahl an gleichmäßig über den Umfang verteilt angeordneten Saugöffnungen 402 auf. An dem Umfang der als Vakuumwalze gestalteten Stanz- und Ablösewalze 40 ist ein die Stanzkontur 401 aufweisendes Stanzblech 46 befestigt, beispielsweise mittels Magnetkraft.

Die Saugöffnungen 402 werden durch das Stanzblech 46 größtenteils abgedeckt, wie schematisch in Fig. 3a dargestellt. Um die Vakuumwalze als Ablösewalze nutzen zu können, weist das Stanzblech 46 innerhalb der Stanzkontur 402 mehrere Durchbrüche 460 für eine oder mehrere Saugöffnungen 402 auf. In dem dargestellten Ausführungsbeispiel sind sechzehn in einer Matrix angeordnete Durchbrüche 460 vorgesehen. Die Anzahl und Anordnung sind jedoch lediglich beispielhaft. Die Durchbrüche 460 sind in dem dargestellten Ausführungsbeispiel alle gleich groß gestaltet und geben jeweils zwei Saugöffnungen 402 frei. In anderen Ausgestaltungen sind die Durchbrüche größer oder kleiner gestaltet.

Wie am besten in Fig. 3b erkennbar, sind in dem dargestellten Ausführungsbeispiel die Durchbrüche 46 jeweils von einem von einer Oberfläche des Stanzblechs 46 abragenden, umlaufenden Steg 462 begrenzt. Der Steg 462 begrenzt einen Bereich, in welchem die über die Saugöffnungen 402 aufgebrachte Saugkraft auf den Stanzrest 201 (nicht dargestellt in Fig. 3a/3b) wirkt. Der Steg 462 unterstützt eine Taschenbildung an dem Stanzrest 201. In anderen Worten wird der Stanzrest 201 innerhalb des Durchbruchs 46 in Richtung der Vakuumwalze für ein sicheres Ablösen verwölbt.

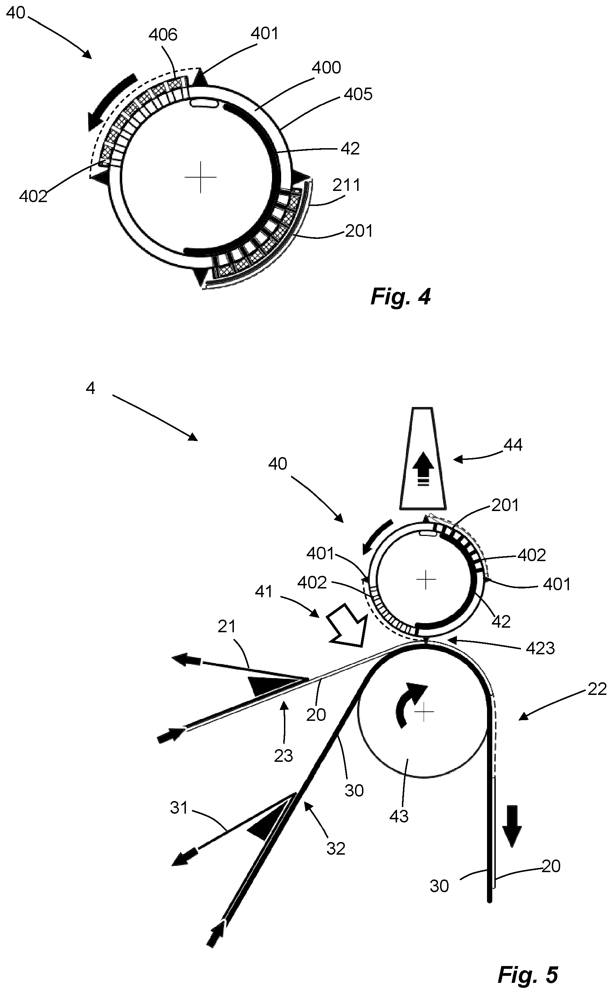

Fig. 4 zeigt schematisch eine alternative Gestaltung einer Stanz- und Ablösewalze 40 zur Verwendung in der Vorrichtung gemäß Fig. 2 sowie mittels der Stanz- und Ablösewalze 40 aufgenommene Stanzreste 201, 211.

Im Unterschied zu der Gestaltung als Vakuumwalze gemäß den Fig. 3a/3b umfasst die in Fig. 4 dargestellte die Stanz- und Ablösewalze 40 einen rotierenden Walzenkörper 400 mit einer geschlossenen Oberfläche 405 umfasst. Die Stanzkontur 401 ist an der Oberfläche 405 des Walzenkörpers 400 vorgesehen. Innerhalb der Stanzkontur 401 ist an dem Walzenkörpers 400 ein Einsatz 406 für die Saugöffnung 402 vorgesehen.

Fig. 5 zeigt schematisiert ein zweites Ausführungsbeispiel einer Vorrichtung 4 zum Einbringen der Fensterausschnitte 22 in das Rahmenmaterial 20. Die Vorrichtung 4 gemäß Fig. 5 ist ähnlich der Vorrichtung 4 gemäß Fig. 2 und für gleiche oder ähnliche Bauteile werden übereinstimmende Bezugszeichen verwendet, für eine detaillierte Beschreibung wird auf oben verwiesen. Im Unterschied zu der Gestaltung gemäß Fig. 2 ist bei der Gestaltung gemäß Fig. 5 in Transportrichtung des Rahmenmaterials 20 stromaufwärts der Stanz- und Ablösewalze 40 eine Delaminiereinrichtung 23 vorgesehen, mittels welcher ein Schutzfilm 21 vor einem Einbringen der Konturschnitte in das Rahmenmaterial 20 abgezogen wird.

Mittels der Stanz- und Ablösewalze 40 werden dabei wie oben beschrieben unter Bildung vom Stanzresten 201 Konturschnitte in das Rahmenmaterial 20 eingebracht und die Stanzreste 201 abtransportiert.

In der Skizze ist die Delaminiereinrichtung 23 in Transportrichtung stromaufwärts der Laminiereinrichtung 41 vorgesehen. In anderen Ausgestaltungen ist die Delaminiereinrichtung 23 in Transportrichtung stromabwärts der Laminiereinrichtung 41 vorgesehen. In wieder anderen Ausgestaltungen erfolgt ein Delaminieren des Schutzfilms 21 zeitgleich zu einem Laminieren der Trägerbahn 30.

In Ausgestaltungen umfasst auch die Vorrichtung 4 gemäß Fig. 5 eine in Fig. 5 nicht dargestellte Prägewalze 45 (vgl. Fig. 2), um eine Prägelinie zur Unterstützung eines Ablösens des Stanzrests 201 in das Rahmenmaterial einzubringen.

Die Stanz- und Ablösewalze 40 für die Vorrichtung gemäß Fig. 5 kann je nach Anwendungsfall beispielsweise entsprechend Fig. 3a/3b oder entsprechend Fig. 4 gestaltet sein.

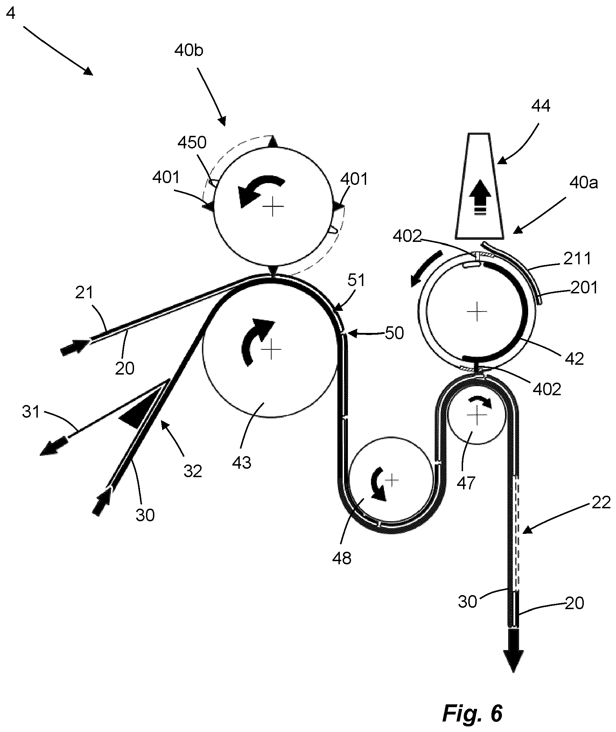

Fig. 6 zeigt schematisiert ein drittes Ausführungsbeispiel einer Vorrichtung 4 zum Einbringen der Fensterausschnitte 22 in das Rahmenmaterial 20. Das Rahmenmaterial 20 wird dabei mit einer Trägerbahn 30 laminiert Im Unterschied zu den Vorrichtungen 4 gemäß den Figuren 2 und 5 sind bei der Ausgestaltung gemäß Fig. 6 eine Ablösewalze 40a und eine zu dieser getrennte, in Transportrichtung stromaufwärts angeordnete Stanzwalze 40b vorgesehen.

Die in Fig. 6 dargestellte Stanzwalze 40b weist eine geschlossene Stanzkontur 401 für den einzubringenden Konturschnitt 50 auf. Die Stanzwalze 40b wirkt auf bekannte Weise mit einer Ambosswalze 43 zusammen. Die Stanzwalze 40b weist zudem eine Prägekante 450 zum Aufbringen einer Prägelinie 51 an dem erzeugten Stanzrest 201 parallel zu einer vorderen Kante des Stanzrests 201 auf. Die Prägelinie 51 dient als Unterstützung für ein nachfolgend mittels der Ablösewalze 40a durchgeführtes Ablösen des Stanzrests 201 von der Trägerbahn 30.

Zum Ablösen der Stanzreste 201 ist eine Ablöseeinrichtung umfassend die Ablösewalze 40a, eine Vakuumeinrichtung 42 und ein am Umfang der Ablösewalze 40a angeordneten Absaugtrichter 44.

An der Ablösewalze 40a ist mindestens eine mit der Vakuumeinrichtung 42 beim Drehen der Ablösewalze 40a fluidisch verbindbare Saugöffnung 402 vorgesehen. Vorzugsweise sind mehrere in einer Reihe in Axialrichtung der Ablösewalze 40a fluchtend angeordnete Saugöffnungen 402 vorgesehen. Die Ablösewalze 40a wirkt mit einer Andrückwalze 47 zusammen.

Mittels der Vakuumeinrichtung 42 kann um über die Saugöffnung 402 bei einer Drehung der Ablösewalze 40a eine Saugkraft auf den Stanzrest 201 aufgebracht werden, um den Stanzrest 201 zunächst wie schematisch in Fig. 6 dargestellt mittels der Saugkraft an einem vorderen Ende von der Trägerbahn 30 abzuschälen und den Stanzrest 201 dann mittels der Ablösewalze 40a von der Trägerbahn 30 und dem Rahmenmaterial 20 abzutransportieren.

Zwischen der Stanzwalze 40b und der Ablösewalze 40a ist in dem dargestellten Ausführungsbeispiel eine Umlenkwalze 48 vorgesehen. In anderen Ausgestaltungen wird auf eine Umlenkwalze 48 verzichtet oder sind mehrere Umlenkwalzen 48 vorgesehen.

In dem in Fig. 6 dargestellten Ausführungsbeispiel wird das Rahmenmaterial 20 mit einem Schutzfilm 21 bereitgestellt, wobei das Rahmenmaterial 20 mit dem Schutzfilm 21 der Stanzwalze 40b und daran anschließend der Ablösewalze 40a zugeführt wird. Der Schutzfilm 21 wird dabei mit dem Rahmenmaterial 20 durchtrennt, sodass an dem Schutzfilm 21 ebenfalls ein Stanzrest 211 anfällt, welcher zusammen mit dem Stanzrest 201 des Rahmenmaterials 20 mittels der Ablösewalze 40a abtransportiert wird.

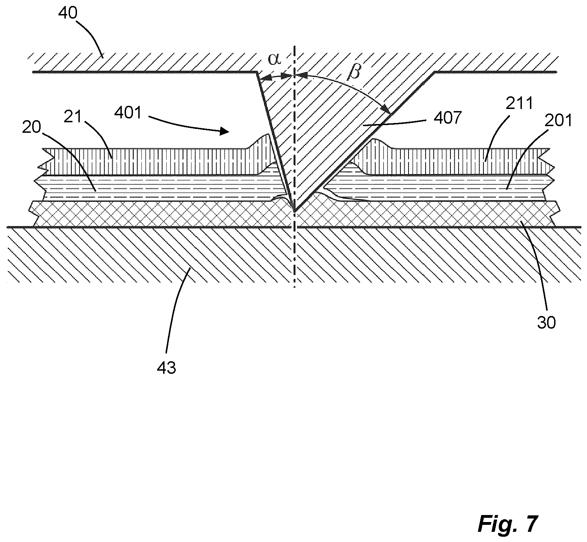

Fig. 7 zeigt schematisch in einer vergrößerten Detailansicht eine Stanzkontur 401 der Stanz- und Ablösewalze 40 gemäß einer der Fig. 2 bis 4 oder der Stanzwalze 40b gemäß Fig. 6 beim Durchtrennen des auf der Trägerbahn 30 angeordneten Rahmenmaterials 20 mit dem Schutzfilm 21 unter Bildung der Stanzreste 201,2 11.

Die in Fig. 7 dargestellte Stanzkontur 401 weist eine asymmetrische Schneide 407 auf. In dem dargestellten Ausführungsbeispiel ist ein Winkel β der Schneide 407 relativ zu einer durch eine Strichpunktlinie dargestellten Radialrichtung der Stanz- und Ablösewalze 40 bzw. der Stanzwalze 40b an einer dem Stanzrest 201 zugewandten Innenseite ist größer als ein Winkel α an einer gegenüberliegenden Außenseite. Beispielsweise beträgt der Winkel β an der Innenseite ca. 30° bis ca. 50°, beispielsweise 45°, und der Winkel α an der Außenseite ca. 15°. Die Gestaltung ist jedoch nicht auf diese Werte beschränkt. Aufgrund des vergleichsweise großen Winkels β an der Außenseite wird ein durchtrenntes Material beim Durchtrennen zur Seite verdrängt, und so ein Ablösen der Stanzreste 201, 211 bewirkt. Durch einen auf der anderen Seite vorgesehenen kleineren oder spitzeren Winkel α wird verhindert, dass sich das Rahmenmaterial 20 auch an der gegenüberliegenden Seite der Schneidkontur 401 von der Trägerbahn 30 löst.

## Patentansprüche

1. Vorrichtung zum Einbringen von Fensterausschnitten (22) in ein bahnförmiges Rahmenmaterial (20) für eine Membran-Elektroden-Einheit, wobei eine Stanzeinrichtung und eine Ablöseeinrichtung vorgesehen sind, wobei das Rahmenmaterial (20) als Materialverbund mit einer Trägerbahn (30) der Stanzeinrichtung zuführbar ist, wobei die Stanzeinrichtung eingerichtet ist, um in das Rahmenmaterial (20) von einer der Trägerbahn (30) gegenüberliegenden Seite des Rahmenmaterials (20) einen das Rahmenmaterial (20) durchtrennenden Konturschnitt (50) unter Bildung eines Stanzrests (201) einzubringen, ohne die Trägerbahn (30) zu durchtrennen, und wobei die Ablöseeinrichtung eingerichtet ist, um den Stanzrest (201) von dem Materialverbund zu trennen, **dadurch gekennzeichnet, dass** die Ablöseeinrichtung eine drehbare Walze (40, 40a) und eine Vakuumeinrichtung (42) umfasst, wobei an der Walze (40, 40a) eine mit der Vakuumeinrichtung (42) fluidisch verbindbare Saugöffnung (402) vorgesehen ist, und wobei die Vakuumeinrichtung (42) eingerichtet ist, um über die Saugöffnung (402) bei einer Drehung der Walze (40, 40a) eine Saugkraft auf den Stanzrest (201) aufzubringen, um den Stanzrest (201) mittels der Saugkraft von der Trägerbahn (30) abzulösen und mittels der Walze (40, 40a) von dem Materialverbund abzutransportieren.

2. Vorrichtung nach Anspruch 1, **dadurch gekennzeichnet, dass** die Walze als Stanz- und Ablösewalze (40) umfassend die Saugöffnung (42) und eine geschlossene Stanzkontur (401) für den einzubringenden Konturschnitt gestaltet ist, wobei die Saugöffnung (402) innerhalb der geschlossenen Stanzkontur (401) angeordnet ist, wobei insbesondere stromaufwärts der Stanz- und Ablösewalze (40) eine Prägewalze (45) zum Aufbringen einer Prägelinie im Bereich des Stanzrests (201) parallel zu einer vorderen Kante des Stanzrests (201) vorgesehen ist.

3. Vorrichtung nach Anspruch 2, **dadurch gekennzeichnet, dass** die Stanz- und Ablösewalze (40) als Vakuumwalze umfassend eine Vielzahl an über den Umfang verteilt angeordneten Saugöffnungen (402) gestaltet ist, wobei die Vorrichtung (4) ein die Stanzkontur (402) aufweisendes Stanzblech (46) umfasst, das an einem Umfang der Stanz- und Ablösewalze (40) befestigbar ist, wobei das Stanzblech (46) innerhalb der Stanzkontur (402) einen Durchbruch (460) für eine oder mehrere Saugöffnungen (402) aufweist, wobei insbesondere der Durchbruch (460) von einem von einer Oberfläche des Stanzblechs (46) abragenden Steg (462) begrenzt ist.

4. Vorrichtung nach Anspruch 2, **dadurch gekennzeichnet, dass** die Stanz- und Ablösewalze (40) einen rotierenden Walzenkörper (400) mit einer geschlossenen Oberfläche (405) umfasst, wobei die Stanzkontur (401) an der Oberfläche (405) des Walzenkörpers (400) vorgesehen ist, und wobei innerhalb der Stanzkontur (401) an dem Walzenkörper (400) ein Einsatz (406) für die Saugöffnung vorgesehen ist, wobei der Einsatz insbesondere einen die Saugöffnung zum Aufbringen der Saugkraft umgebenden Steg aufweist.

5. Vorrichtung nach Anspruch 1, **dadurch gekennzeichnet, dass** die Walze als Ablösewalze (40a) gestaltet ist und die Stanzeinrichtung eine in Transportrichtung des Rahmenmaterials (20) stromaufwärts der Ablösewalze (40) angeordnete drehbare Stanzwalze (40b) umfasst, wobei die Stanzwalze (40b) eine geschlossene Stanzkontur (401) für den einzubringenden Konturschnitt aufweist, wobei insbesondere die Stanzwalze (40b) eine Prägekante (450) zum Aufbringen einer Prägelinie (51) an dem Stanzrest (201) parallel zu einer vorderen Kante des Stanzrests (201) aufweist.

6. Vorrichtung nach einem der Ansprüche 2 bis 5, **dadurch gekennzeichnet, dass** die Stanzkontur (401) der Stanz- und Ablösewalze (40) bzw. die Stanzwalze (40b) eine asymmetrische Schneide (407) aufweist, wobei insbesondere ein Winkel der Schneide (407) relativ zu einer Radialrichtung der Walze an einer dem Stanzrest (201) zugewandten Innenseite größer ist als an einer gegenüberliegenden Außenseite.

7. Vorrichtung nach einem der Ansprüche 1 bis 5, **dadurch gekennzeichnet, dass** die Ablöseeinrichtung einen am Umfang der Walze (40, 40a) angeordneten Absaugtrichter umfasst.

8. Vorrichtung nach einem der Ansprüche 1 bis 6, **dadurch gekennzeichnet, dass** das Rahmenmaterial (20) mit einem Schutzfilm (21) bereitstellbar ist, wobei eine Laminiereinrichtung (41) zum Verbinden der Trägerbahn (30) mit dem Rahmenmaterial (20) vorgesehen ist, wobei die eine Laminiereinrichtung eingerichtet ist, um die Trägerbahn auf einer dem Schutzfilm gegenüberliegenden Seite mit dem Rahmenmaterial zu verbinden, und wobei die Vorrichtung eine stromaufwärts oder stromabwärts der Stanzeinrichtung und der Ablöseeinrichtung angeordnete Delaminiereinrichtung aufweist, die eingerichtet ist, um den Schutzfilm von dem Rahmenmaterial zu delaminieren.

9. Verfahren zum Einbringen von Fensterausschnitten (22) in ein bahnförmiges Rahmenmaterial (20) für eine Membran-Elektroden-Einheit, wobei das Rahmenmaterial (20) zumindest abschnittsweise als Materialverbund mit einer Trägerbahn (30) verarbeitet wird, wobei in das Rahmenmaterial (20) von einer der Trägerbahn (30) gegenüberliegenden Seite des Rahmenmaterials (20) ein das Rahmenmaterial (20) durchtrennender Konturschnitt (50) unter Bildung eines Stanzrest (201) eingebracht wird, wobei der Konturschnitt (50) eingebracht wird, ohne die Trägerbahn (30) zu durchtrennen, und wobei der Stanzrest (201) von dem Materialverbund getrennt wird, **dadurch gekennzeichnet, dass** der Stanzrest (201) mittels einer drehbaren Walze (40, 40a) mit einer Saugöffnung (402) von dem Materialverbund getrennt wird, wobei über die Saugöffnung (402) eine Saugkraft auf den Stanzrest (201) aufgebracht wird, sodass der Stanzrest (201) mittels der Saugkraft von der Trägerbahn (30) abgelöst und mittels der Walze (40, 40a) von dem Materialverbund abtransportiert wird.

10. Verfahren nach Anspruch 8, **dadurch gekennzeichnet, dass** der Stanzrest (201) mittels der Walze (40, 40a) zu einem am Umfang der Walze angeordneten Absaugtrichter abtransportiert wird.

11. Verfahren nach Anspruch 8 oder 9, **dadurch gekennzeichnet, dass** die Walze als Stanz- und Ablösewalze (40) gestaltet ist, wobei mittels der Stanz- und Ablösewalze (40) der Konturschnitt (50) in das Rahmenmaterial eingebracht wird, oder dass in Transportrichtung des Rahmenmaterials (20) stromaufwärts der Walze eine Stanzwalze (40b) vorgesehen ist, wobei mittels der Stanzwalze (40b) der Konturschnitt (50) in das Rahmenmaterial (20) eingebracht wird,

12. Verfahren nach Anspruch 8, 9 oder 10, **dadurch gekennzeichnet, dass** das Rahmenmaterial mit einem Schutzfilm bereitgestellt wird, wobei die Trägerbahn auf einer dem Schutzfilm abgewandten Seite mit dem Rahmenmaterial laminiert wird, und wobei stromaufwärts oder stromabwärts der Walze der Schutzfilm von dem Rahmenmaterial delaminiert wird.

13. Verwendung einer drehbaren Walze beim Einbringen eines Fensterausschnitts in ein bahnförmiges Rahmenmaterial (20) für eine Membran-Elektroden-Einheit, wobei das Rahmenmaterial (20) als Materialverbund mit einer Trägerbahn (30) der Walze (40, 40a) zuführbar ist, wobei an der Walze (40, 40a) eine mit einer Vakuumeinrichtung fluidisch verbindbare Saugöffnung (402) vorgesehen ist, wobei über die Saugöffnung (402) bei einer Drehung der Walze eine Saugkraft auf einen in dem Fensterausschnitt angeordneten Stanzrest (201) aufbringbar ist, um den Stanzrest (201) des Rahmenmaterials (20) mittels der Saugkraft von der Trägerbahn (30) abzulösen und mittels der Walze (40, 40a) von dem Materialverbund abzutransportieren, wobei insbesondere die Walze als Stanz- und Ablösewalze (40) umfassend eine geschlossene Stanzkontur (401) und die Saugöffnung (402) gestaltet ist, wobei die Saugöffnung (402) innerhalb der geschlossenen Stanzkontur (401) angeordnet ist.

14. Verwendung nach Anspruch 13, **dadurch gekennzeichnet, dass** die Stanz- und Ablösewalze (40) als Vakuumwalze umfassend eine Vielzahl an gleichmäßig über den Umfang verteilt angeordneten Saugöffnungen (402) gestaltet ist, wobei an einem Umfang der Stanz- und Ablösewalze (40) ein die Stanzkontur (401) aufweisendes Stanzblech (46) befestigbar ist, wobei das Stanzblech (46) innerhalb der Stanzkontur (401) einen Durchbruch (460) für eine oder mehrere Saugöffnungen (402) aufweist, wobei insbesondere der Durchbruch (460) von einem von einer Oberfläche des Stanzblechs (46) abragenden Steg (462) begrenzt ist.

15. Verwendung nach Anspruch 13, **dadurch gekennzeichnet, dass** die Stanz- und Ablösewalze (40) einen rotierenden Walzenkörper (400) mit einer geschlossenen Oberfläche (405) umfasst, wobei die Stanzkontur (401) an der Oberfläche (400) des Walzenkörpers (400) vorgesehen ist, wobei innerhalb der Stanzkontur (401) an dem Walzenkörper (405) ein Einsatz für die Saugöffnung (402) vorgesehen ist, wobei der Einsatz insbesondere einen die Saugöffnung (402) zum Aufbringen der Saugkraft umgebenden Steg aufweist.

## Claims

1. Apparatus for making window cutouts (22) in a frame material (20) in web form for a membrane electrode unit, wherein a punching device and a detachment device are provided, wherein the frame material (20) can be fed to the punching device as a material combination with a carrier web (30), wherein the punching device is configured to make in the frame material (20) a contour cut (50) that cuts through the frame material (20) from a side of the frame material (20) opposite to the carrier web (30), while forming a punching chad (201), without cutting through the carrier web (30), and wherein the detachment device is configured to separate the punching chad (201) from the material combination, **characterized in that** the detachment device comprises a rotatable roller (40, 40a) and a vacuum device (42), wherein a suction opening (402) that can be connected fluidically to the vacuum device (42) is provided on the roller (40, 40a), and wherein the vacuum device (42) is configured to apply a suction force to the punching chad (201) via the suction opening (402) as the roller (40, 40a) rotates in order to detach the punching chad (201) from the carrier web (30) by use of the suction force and to transport it away from the material combination using the roller (40, 40a).

2. Apparatus according to Claim 1, **characterized in that** the roller is configured as a punching and detachment roller (40) comprising the suction opening (42) and a closed punching contour (401) for the contour cut to be made, wherein the suction opening (402) is arranged within the closed punching contour (401), wherein an embossing roller (45) for applying an embossed line in the region of the punching chad (201) is provided parallel to a leading edge of the punching chad (201), in particular upstream of the punching and detachment roller (40).

3. Apparatus according to Claim 2, **characterized in that** the punching and detachment roller (40) is configured as a vacuum roller comprising a multiplicity of suction openings (402) arranged in a manner distributed over the circumference, wherein the apparatus (4) comprises a punching plate (46), which has the punching contour (402) and can be secured on a circumference of the punching and detachment roller (40), wherein the punching plate (46) has, within the punching contour (402), an aperture (460) for one or more suction openings (402), wherein, in particular, the aperture (460) is delimited by a ridge (462) projecting from a surface of the punching plate (46).

4. Apparatus according to Claim 2, **characterized in that** the punching and detachment roller (40) comprises a rotating roller body (400) with a closed surface (405), wherein the punching contour (401) is provided on the surface (405) of the roller body (400), and wherein an insert (406) for the suction opening is provided on the roller body (400) within the punching contour (401), wherein, in particular, the insert has a ridge which surrounds the suction opening for the application of the suction force.

5. Apparatus according to Claim 1, **characterized in that** the roller is configured as a detachment roller (40a), and the punching device comprises a rotatable punching roller (40b) arranged upstream of the detachment roller (40) in the direction of transport of the frame material (20), wherein the punching roller (40b) has a closed punching contour (401) for the contour cut to be made, wherein, in particular, the punching roller (40b) has an embossing edge (450) for the application of an embossed line (51) on the punching chad (201) parallel to a leading edge of the punching chad (201).

6. Apparatus according to one of Claims 2 to 5, **characterized in that** the punching contour (401) of the punching and detachment roller (40) or the punching roller (40b) has an asymmetrical cutter (407), wherein, in particular, an angle of the cutter (407) relative to a radial direction of the roller is larger on an inner side facing the punching chad (201) than on an opposite outer side.

7. Apparatus according to one of Claims 1 to 5, **characterized in that** the detachment device comprises a suction funnel arranged at the circumference of the roller (40, 40a).

8. Apparatus according to one of Claims 1 to 6, **characterized in that** the frame material (20) can be made available with a protective film (21), wherein a laminating device (41) for connecting the carrier web (30) to the frame material (20) is provided, wherein the one laminating device is configured in order to connect the carrier web to the frame material on an opposite side from the protective film, and wherein the apparatus has a delaminating device, which is arranged upstream or downstream of the punching device and the detachment device and is configured to delaminate the protective film from the frame material.

9. Method for making window cutouts (22) in a frame material (20) in web form for a membrane electrode unit, wherein, at least in some section or sections, the frame material (20) is processed as a material combination with a carrier web (30), wherein a contour cut (50) that cuts through the frame material (20) is made in the frame material (20) from a side of the frame material (20) opposite to the carrier web (30), while forming a punching chad (201), wherein the contour cut (50) is made without cutting through the carrier web (30), and wherein the punching chad (201) is separated from the material combination, **characterized in that** the punching chad (201) is separated from the material combination using a rotatable roller (40, 40a) having a suction opening (402), wherein a suction force is applied to the punching chad (201) via the suction opening (402), with the result that the punching chad (201) is detached from the carrier web (30) by use of the suction force and transported away from the material combination using the roller (40, 40a).

10. Method according to Claim 8, **characterized in that** the punching chad (201) is transported away using the roller (40, 40a) to a suction funnel arranged at the circumference of the roller.

11. Method according to Claim 8 or 9, **characterized in that** the roller is configured as a punching and detachment roller (40), wherein the contour cut (50) is made in the frame material using the punching and detachment roller (40), or **in that** a punching roller (40b) is provided upstream of the roller in the direction of transport of the frame material (20), wherein the contour cut (50) is made in the frame material (20) using the punching roller (40b).

12. Method according to Claim 8, 9 or 10, **characterized in that** the frame material is made available with a protective film, wherein the carrier web is laminated to the frame material on a side facing away from the protective film, and wherein the protective film is delaminated from the frame material upstream or downstream of the roller.

13. Use of a rotatable roller in making a window cutout in a frame material (20) in web form for a membrane electrode unit, wherein the frame material (20) can be fed to the roller (40, 40a) as a material combination with a carrier web (30), wherein a suction opening (402) that can be connected fluidically to a vacuum device is provided on the roller (40, 40a), wherein, as the roller rotates, a suction force is applied via the suction opening (402) to a punching chad (201) arranged in the window cutout in order to detach the punching chad (201) of the frame material (20) from the carrier web (30) by use of the suction force and to transport it away from the material combination using the roller (40, 40a), wherein in particular the roller is configured as a punching and detachment roller (40) comprising a closed punching contour (401) and the suction opening (402), wherein the suction opening (402) is arranged within the closed punching contour (401).

14. Use according to Claim 34, **characterized in that** the punching and detachment roller (40) is configured as a vacuum roller comprising a multiplicity of suction openings (402) arranged in a manner distributed uniformly over the circumference, wherein a punching plate (46), which has the punching contour (401), can be secured on a circumference of the punching and detachment roller (40), wherein the punching plate (46) has, within the punching contour (401), an aperture (460) for one or more suction openings (402), wherein, in particular, the aperture (460) is delimited by a ridge (462) projecting from a surface of the punching plate (46).

15. Use according to Claim 13, **characterized in that** the punching and detachment roller (40) comprises a rotating roller body (400) with a closed surface (405), wherein the punching contour (401) is provided on the surface (405) of the roller body (400), wherein an insert for the suction opening (402) is provided on the roller body (400) within the punching contour (401), wherein, in particular, the insert has a ridge, which surrounds the suction opening (402) for the application of the suction force.

## Revendications

1. Dispositif pour réaliser des découpes en forme de fenêtre (22) dans un matériau-cadre en forme de bande (20) pour une unité membrane-électrode, sachant que sont prévus un dispositif de perforation et un dispositif de détachement, sachant que le matériau-cadre (20) est distribuable comme matériau composite avec une bande support (30) au dispositif de perforation, sachant que le dispositif de perforation est configuré pour réaliser, dans le matériau-cadre (20), une découpe de contour (50) perçant le matériau-cadre (20) depuis un côté du matériau-cadre (20) opposé à la bande support (30) en formant une chute de perforation (201) sans percer la bande support (30), et sachant que le dispositif de détachement est configuré pour séparer la chute de perforation (201) du matériau composite, **caractérisé en ce que** le dispositif de détachement comprend un rouleau (40, 40a) rotatif et un dispositif à vide (42), sachant qu'est prévu, sur le rouleau (40, 40a), un orifice d'aspiration (402) reliable par liaison fluidique au dispositif à vide (42), et sachant que le dispositif à vide (42) est configuré pour appliquer une force d'aspiration sur la chute de perforation (201) via l'orifice d'aspiration (402) par une rotation du rouleau (40, 40a) pour détacher la chute de perforation (201) de la bande support (30) au moyen de la force d'aspiration et la transporter hors du matériau composite au moyen du rouleau (40, 40a).

2. Dispositif selon la revendication 1, **caractérisé en ce que** le rouleau est conçu sous forme de rouleau de perforation et de détachement (40) comprenant l'orifice d'aspiration (42) et un contour de perforation fermé (401) pour la découpe de contour à réaliser, sachant que l'orifice d'aspiration (402) est disposé à l'intérieur du contour de perforation fermé (401), sachant que notamment en amont du rouleau de perforation et de détachement (40) est prévu un rouleau d'estampage (45) pour appliquer une ligne d'estampage dans la zone de la chute de perforation (201) parallèlement à un bord avant de la chute de perforation (201).

3. Dispositif selon la revendication 2, **caractérisé en ce que** le rouleau de perforation et de détachement (40) est conçu comme rouleau à vide comprenant une multitude d'orifices d'aspiration (402) répartis sur la circonférence, sachant que le dispositif (4) comprend une tôle de perforation (46) présentant le contour de perforation (402) qui peut être fixée à une circonférence du rouleau de perforation et de détachement (40), sachant que la tôle de perforation (46) présente, à l'intérieur du contour de perforation (402), une percée (460) pour un ou plusieurs orifices d'aspiration (402), sachant que notamment la percée (460) est limitée par une nervure (462) saillant d'une surface de la tôle de perforation (46).

4. Dispositif selon la revendication 2, **caractérisé en ce que** le rouleau de perforation et de détachement (40) comprend un corps de rouleau (400) rotatif avec une surface fermée (405), sachant que le contour de perforation (401) est prévu sur la surface (405) du corps de rouleau (400), et sachant qu'à l'intérieur du contour de perforation (401) sur le corps de rouleau (400), un insert (406) est prévu pour l'orifice d'aspiration, sachant que l'insert présente notamment une nervure entourant l'orifice d'aspiration pour appliquer la force d'aspiration.

5. Dispositif selon la revendication 1, **caractérisé en ce que** le rouleau est conçu comme rouleau de détachement (40a) et que le dispositif de perforation comprend un rouleau de perforation (40b) rotatif, disposé en amont du rouleau de détachement (40) dans le sens de transport du matériau-cadre (20), sachant que le rouleau de perforation (40b) présente un contour de perforation fermé (401) pour la découpe de contour à réaliser, sachant que notamment le rouleau de perforation (40b) présente un bord d'estampage (450) pour appliquer une ligne d'estampage (51) sur la chute de perforation (201) parallèlement à un bord avant de la chute de perforation (201).

6. Dispositif selon l'une des revendications 2 à 5, **caractérisé en ce que** le contour de perforation (401) du rouleau de perforation et de détachement (40) ou le rouleau de perforation (40b) présente un tranchant asymétrique (407), sachant que notamment un angle du tranchant (407) par rapport à un sens radial du rouleau sur un côté intérieur tourné vers la chute de perforation (201) est supérieur à celui sur un côté extérieur opposé.

7. Dispositif selon l'une des revendications 1 à 5, **caractérisé en ce que** le dispositif de détachement comprend un entonnoir d'aspiration disposé sur la circonférence du rouleau (40, 40a).

8. Dispositif selon l'une des revendications 1 à 6, **caractérisé en ce que** le matériau-cadre (20) peut être fourni avec un film protecteur (21), sachant qu'un dispositif de lamination (41) est prévu pour relier la bande support (30) au matériau-cadre (20), sachant que ledit un dispositif de lamination est configuré pour relier la bande support au matériau-cadre sur un côté opposé au film protecteur, et sachant que le dispositif présente un dispositif de délamination disposé en amont ou en aval du dispositif de perforation et du dispositif de détachement, qui est configuré pour délaminer le film protecteur du matériau-cadre.

9. Procédé pour réaliser des découpes en forme de fenêtre (22) dans un matériau-cadre (20) en forme de bande pour une unité membrane-électrode, sachant que le matériau-cadre (20) est transformé au moins partiellement comme matériau composite avec une bande support (30), sachant qu'une découpe de contour (50) perçant le matériau-cadre (20) est réalisée dans le matériau-cadre (20) depuis un côté du matériau-cadre (20), opposé à la bande support (30), en formant une chute de perforation (201), sachant que la découpe de contour (50) est réalisée sans percer la bande support (30), et sachant que la chute de perforation (201) est séparée du matériau composite, **caractérisé en ce que** la chute de perforation (201) est séparée du matériau composite au moyen d'un rouleau (40, 40a) rotatif avec un orifice d'aspiration (402), sachant qu'une force d'aspiration est appliquée sur la chute de perforation (201) via l'orifice d'aspiration (402) de sorte que la chute de perforation (201) est détachée de la bande support (30) au moyen de la force d'aspiration et transportée hors du matériau composite au moyen du rouleau (40, 40a).

10. Procédé selon la revendication 8, **caractérisé en ce que** la chute de perforation (201) est transportée, au moyen du rouleau (40, 40a), vers un entonnoir d'aspiration disposé sur la circonférence du rouleau.

11. Procédé selon la revendication 8 ou 9, **caractérisé en ce que** le rouleau est conçu sous forme de rouleau de perforation et de détachement (40), sachant que la découpe de contour (50) est réalisée dans le matériau-cadre au moyen du rouleau de perforation et de détachement (40), ou qu'un rouleau de perforation (40b) est prévu en amont du rouleau dans le sens de transport du matériau-cadre (20), sachant que la découpe de contour (50) est réalisée dans le matériau-cadre (20) au moyen du rouleau de perforation (40b).

12. Procédé selon la revendication 8, 9 ou 10, **caractérisé en ce que** le matériau-cadre est fourni avec un film protecteur, sachant que la bande support est laminée avec le matériau-cadre sur un côté opposé au film protecteur, et sachant que le film protecteur est délaminé du matériau-cadre en amont ou en aval du rouleau.

13. Utilisation d'un rouleau rotatif lors de la réalisation d'une découpe en forme de fenêtre dans un matériau-cadre (20) en forme de bande pour une unité membrane-électrode, sachant que le matériau-cadre (20) est distribuable au rouleau (40, 40a) comme matériau composite avec une bande support (30), sachant qu'un orifice d'aspiration (402) reliable fluidiquement à un dispositif à vide est prévu sur le rouleau (40, 40a), sachant qu'une force d'aspiration est applicable sur une chute de perforation (201) disposée dans la découpe en forme de fenêtre via l'orifice d'aspiration (402) lors d'une rotation du rouleau pour détacher de la bande support (30) la chute de perforation (201) du matériau de perforation (20) au moyen de la force d'aspiration et la transporter hors du matériau composite au moyen du rouleau (40, 40a), sachant que notamment, le rouleau est conçu sous forme de rouleau de perforation et de détachement (40) comprenant un contour de perforation (401) fermé et l'orifice d'aspiration (402), sachant que l'orifice d'aspiration (402) est disposé à l'intérieur du contour de perforation (401) fermé.

14. Dispositif selon la revendication 13, **caractérisé en ce que** le rouleau de perforation et de détachement (40) est conçu sous forme de rouleau à vide comprenant une multitude d'orifices d'aspiration (402) répartis uniformément sur la circonférence, sachant qu'une tôle de perforation (46) présentant le contour de perforation (401) est fixable sur une circonférence du rouleau de perforation et de détachement (40), sachant que la tôle de perforation (46) présente, à l'intérieur du contour de perforation (401), une percée (460) pour un ou plusieurs orifices d'aspiration (402), sachant que notamment la percée (460) est limitée par une nervure (462) saillant d'une surface de la tôle de perforation (46).

15. Dispositif selon la revendication 13, **caractérisé en ce que** le rouleau de perforation et de détachement (40) comprend un corps de rouleau (400) rotatif avec une surface fermée (405), sachant que le contour de perforation (401) est prévu sur la surface (405) du corps de rouleau (400), et sachant qu'à l'intérieur du contour de perforation (401) sur le corps de rouleau (400), un insert est prévu pour l'orifice d'aspiration (402), sachant que l'insert présente notamment une nervure entourant l'orifice d'aspiration (402) pour appliquer la force d'aspiration.
